# EUROPÄISCHE PATENTSCHRIFT

(11) **EP 2 132 114 B1**
(45) Veröffentlichungstag und Bekanntmachung des Hinweises auf die Patenterteilung: **18.05.2011**
(21) Anmeldenummer: 08709069.2
(22) Anmeldetag: 18.02.2008
(51) Int. Cl.: B65G 1/137, B01L 3/00, G06Q 10/00

(54) **RFID-LAGERSYSTEM**
RFID STORAGE SYSTEM
SYSTÈME DE STOCKAGE À RFID

(30) Priorität: 15.03.2007 DE 102007013237
(43) Veröffentlichungstag der Anmeldung: 16.12.2009
(73) Patentinhaber: joint analytical systems GmbH, 47445 Moers (DE)
(72) Erfinder: GERSTEL, Joachim, 45475 Mühlheim an der Ruhr (DE)
(74) Vertreter: Weisse, Renate
(86) Internationale Anmeldenummer: PCT/EP2008/051929
(87) Internationale Veröffentlichungsnummer: WO 2008/110433

(56) Entgegenhaltungen:
- EP-A- 1 829 816
- WO-A-2005/015465
- DE-A1-102005 051 595
- US-A1- 2005 205 673

## Beschreibung

### Technisehes Gebiet

Die Erfindung begriff ein Lagersystem nach dem Oberbegriff des Anspruchs 1. Ein derartiges Lagersystem ist bereits aus WO 2005/015465 A1. bekannt. Radio Frequency Idenitification (RFID) ist ein Verfahren zur Identifizierung und/oder Lokalisierung von Gegenständen. Produkte, die mit einem RFID-Transponder versehen sind, können mittels einer RFID-Antenne erfasst werden. Die Antenne liest eine Transponderkennung aus. Mittels dieser Kennung kann das Produkt identifiziert werden.

### Stand der Technik

Es ist bekannt, Lagersysteme mit RFID-Technologie auszustatten. Insbesondere wurden Verwendungen in Bibliotheken und Supermärkten beschrieben. Der mit Produkten gefüllte Warenkorb in einem Supermarkt wird mit Hilfe der RFID-Transponder erfasst und abgerechnet. Dadurch muß nicht mehr der Preis für jedes einzelne Produkt separat ermittelt werden.

Es ist weiterbin bekannt, RFID-Technologie zur Identifizierung von Personen, zum Beispiel in Reisepässen, einzusetzen.

Die WO 2006/014813 offenbart ein Lager mit einer Überwachung des Ein- und Ausgangs von Gegenständen, die mit einem RFID-Tag versehen sind. Ein RFID-Detektor wird zur Überwachung eingesetzt, der innerhalb des abgeschlossenen Lagers angeordnet ist. Ein Computer steuert das Öffnen und Schließen des Vordereingangs und überwacht die Identifikation des Nutzers.

DE 10 2005 051 595 A1 offenbart ein. Aktensicherheitssystem mit einem Dokumentenordner, an dem ein RFID-Etikett haftet. In dem RFID-Etikett werden spezifische Mediumsidentifikationsinformationen aufgezeichnet. Ein in dem Aktenschrank vorgesehener Fachsonsor erfasst den Ein- und Ausgang der einzelnen Dokumentordner in und aus dem Aktenschrank. Jeweils mehrere Dokumentordner werden von einem Sensor erfasst. Nachteilig bei dieser Anordnung ist es, dass bei großen Mengen an Dokumentordnem die Anzahl der Dokumentordner pro Fachsensor sehr groß sein kann. Ein einzelner Dokumentordner ist dann nicht mehr leicht aufzufinden. Mit dem offenbarten Aktensicherheitssystem kann zwar immer eindeutig geklärt werden, welche Dokumente dem Aktenschrank entnommen wurden. Das Lokalisieren solcher Akten basiert jedoch auf herkömmlichen Ordnungssystemen.

WO 2005/015465 A1 offenbart ein Artikel-Management System bei dem die Artikel mit einer Preiskarte versehen werden. Die Preiskarte weist ein RFID-Tag auf. Ein Lager-Management Gerät verhält die in dem RFID-Tag gespeicherten Informationen und Lage-Informationen, welche mittels Antennen erhalten werden, die in den Regalplätzen angeordnet sind.

US 2005/0205673A1 offenbart ein Rack mit integrierten Probenbehältern. Das Rack ist mit einem oder mehreren RFID-Tags versehen, die einem, mehreren oder allen Proben zugeordnet sind. Das RFID-Tag dient der Identifizierung der Probe.

### Offenbarung der Erfindung

Es ist Aufgabe der Erfindung, eine Anordnung zu schaffen, welche die Lagerhaltung und insbesondere das Auffinden von eingelagerten Produkten vereinfacht und kostengünstiger macht.

Erfindungsgemäß wird die Aufgabe durch das Kennzeichen des Anspruchs 1 gelöst.

Anders als bei bekanten Systemen wird hier jedem Produkt eindeutig eine Antenne am Lagerort zugeordnet. Dadurch ist die Produktlage leicht erfassbar. Das Produkt ist leicht aufzufinden. Es besteht weiterhin die Möglichkeit das Lager mit Anzeigemitteln auszustatten, welche durch die Abfrage aktivierbar sind. Ein solches Anzeigemittel kann zum Beispiel eine Leuchte, insbesondere eine LED sein. Es sind aber auch andere optische oder akustische Anzeigemittel denkbar. Das Anzeigemittel erzeugt dann bei einer Suchanfrage, z.B. an einem Eingabesystem eines angeschlossenen Computers, ein Signal erzeugen. Das Signal gibt an, wo sich das angefragte Produkt befindet. Die Produkte können chaotisch, d.h. an beliebigem Ort innerhalb des Lagers abgelegt werden. Durch die Abfrage mittels z.B. eines Touchscreens kann die genaue Lage des Produkts angegeben werden. Die Produkte sind immer auffindbar. Dies macht das Auffüllen des Lagers besonders kostengünstig.

Ein besonderer Vorteil ergibt sich, wenn ein Speicher zum Speichern der von der Antenne erfassten Produktlage in dem Lager zusammen mit produktspezifischen Daten vorgesehen ist, sowie Mittel zur Abfrage der Produktlage.

In einer besonders bevorzugten Ausgestaltung der Ereindung sind die mit einem RFID-Transponder versehenen Produkte von Racks zur Aufnahme von Probenbehältern mit einer Probenkennung gebildet, und die Lage und Probenkennung sind in dem RFID-Transponder des zugehörigen Racks speicherbar. Dann werden mehrere Probenbehälter gemeinsam in einem Rack gelagert und über das Transponder-Antennensystem registriert und lokalisiert. Gerade bei sehr vielen Produkten, wie etwa Proben im medizinischen, pharmakologischen und Laborbereich, spart dies die Verwendung sehr vieler Antennen.

Vorzugweise ist jeder Probenbehälter zusätzlich mit einem RFID-Transponder zum Speichern der jeweiligen Probenkennung versehen. Probenkennung ist nicht nur eine Information zur Bezeichnung der Probe, sondern kann auch Informationen über Art, Herkunft, Erstellungsdatum, etc. umfassen.

In einer besonders bevorzugten Ausgestaltung der Erfindung ist eine zu der räumlichen Anordnung der Probenbehälter-Aufnahmen korrespondierende Antennenanordnung zum Auslesen der zu den Probenbehälter gehörigen, in den RFID-Transpondern gespeicherten Probenkennung vorgesehen. Die Antennenanordnung umfasst gerade so viele Antennen wie Aufnahmeplätze in dem Rack vorgesehen sind. Die Antennen sind räumlich auf gleiche Weise verteilt wie die Aufnahmeplätze. Wenn nun ein Rack auf die Antennenanordnung gestellt wird, liest jede Antenne die Informationen aus dem RFID-Transponder des zugehörigen Probenbehälters aus. Diese Vielzahl von Informationen können anschließend auf den RFID-Transponder des Racks übertragen werden. Für gleichartige Racks ist dann nur eine Antennenanordnung erforderlich. Dies erlaubt die individuelle Aufnahme jeder Probe ohne dass für jede Probe eine eigene Antenne vorgesehen werden muß.

Die Lage der Einzelantennen innerhalb der Antennenanordnung ist zusammen mit der Probenkennung des zugehörigen Probenbehälters als Teil der Produktkennung auf den RFID-Transponder des Racks übertragbar, dort speicherbar und von der Antenne für den Lagerort auslesbar ist.

Vorzugsweise sind Mittel zum separaten Auslesen des RFID-Transponders eines einzelnen Probenbehälters vorgesehen. Mit diesem Einzelscanner kann verifiziert werden, ob es sich bei der aufgefundenen Einzelprobe tatsächlich um die gesuchte Probe handelt.

Vorzugsweise ist das Lager abgeschlossen, und der Zugang ist mit einer Autorisierungseinrichtung zur Überprüfung von Autorisierungsdaten versehen ist. Im Gegensatz zu Supermärkten oder Bibliotheken ist das Lager nicht für jedermann zugänglich. Dadurch wird die Diebstahlgefahr erheblich verringert. Das Lager ist weiterhin völlig unabhängig von Personal und kann ggf. ohne Lagerverwalter, Verkaufs- oder Bedienpersonal betrieben werden. Jeder, der eine geeignete Zugangsberechtigung hat, muss diese an der Autorisierungseinrichtung vor dem Zugang nachweisen. Durch die Autorisierungseinrichtung ist der Personenverkehr zum Lager entsprechend beschränkt.

Die Autorisierungseinrichtung kann einen Kartenleser umfassen, mit dem eine Personenidentifizierungskarte gelesen wird. Solche Personenidentifizierungskarten können mit einem Barcode, einem Magnetstreifen, einem Mikrochip, einen Transponder oder jeder anderen geeigneten Technologie ausgestattet sein. Auch die Autorisierung mittels Erkennung biometrischer Merkmale ist geeignet. Es ist ferner möglich einen Kartenleser zu verwenden, der über bildverarbeitende Mittel verfügt und den Aufdruck der Karte einliest. Die Personenidentifizierungskarte dient der eindeutigen Identifizierung einer Person oder Organisation, die den Zugang zu dem Lager erhält. Es versteht sich, dass die Person oder Organisation statt mit einem Namen auch durch eine Nummer für eine firmeninterne Kostenstelle, eine Bankkontonummer, eine Ausweis- oder Mitgliedsnummer oder dergleichen repräsentiert sein kann.

In einer Ausgestaltung der Erfindung umfasst die Autorisierungseinrichtung eine Eingabetastatur, mit der ein personenspezifischer Code eingebbar ist. Eine solche Eingabetastatur kann durch ein Keyboard oder ein Touchscreen oder dergleichen verwirklicht werden. Es sind auch Sprach- oder Bildaufzeichnungsgeräte zur Eingabe des Codes oder zur Personenidentifizierung denkbar. Zur Autorisierung des Zugangs können Daten verwendet werden, die in der Autorisierungseinrichtung gespeichert sind. Die Eingabetastatur kann aber auch zusätzlich einen Kartenleser umfassen. Dabei kann der personenspezifische Code auf der Personenidentifizierungskarte gespeichert sein. Dann braucht die Autorisierungseinrichtung keine Daten für die autorisierte Personengruppe speichern. Vielmehr erfolgt die Autorisierung des Zugangs durch die Bestätigung der auf der Karte gespeicherten Daten mittels der Eingabetastatur.

In einer Ausgestaltung der Erfindung sind Mittel zum Speichern und/oder Übertragen von produktspezifischen Daten zusammen mit den Autorisierungsdaten vorgesehen. Die Verknüpfung der Autorisierungsdaten mit produktspezifischen Daten ermöglicht es, jede Entnahme einer Person oder Organisation zuzuordnen. Entsprechend kann die Abrechnung entnommener Produkte ohne die Einschaltung von zusätzlichem Personal erfolgen. Die von den Transpondern übertragenen Informationen über Preise, Kennnummern oder Namen der Produkte werden dem Konto der entnehmenden Person belastet.

Das Lager kann als begehbares Lager, ähnlich wie ein Supermarkt ausgestaltet sein. Das Lager kann aber auch ein einfacher Schrank oder ein mobiles Lager sein.

Bei einem mobilen Lager sind vorzugsweise Mittel zur Lokalisierung des gesamten Lagers vorgesehen. Es können weitere, gleichartige Lager vorgesehen sein, welche über ein Netzwerk miteinander verbunden sind. In einer Ausgestaltung der Erfindung sind Mittel zur Abfrage der Lage und/oder Menge von gelagerten Produkten für alle Lager vorgesehen.

Ausgestaltungen der Erfindung sind Gegenstand der Unteransprüche. Ein Ausführungsbeipspiel ist nachstehend unter Bezugnahme auf die beigefügten Zeichnungen näher erläutert.

### Kurze Beschreibung der Zeichnungen

- Fig.1: zeigt schematisch eine begehbare Anordnung zur Lagerhaltung.
- Fig.2: zeigt schematisch eine Anordnung zur Lagerhaltung mit detektierbarem Lagerort.
- Fig.3: zeigt ein Rack mit einer Vielzahl von Aufnahmen für Probenbehälter und eine zugehörige Antennenanordnung.

### Beschreibung des Ausführungsbeispiels

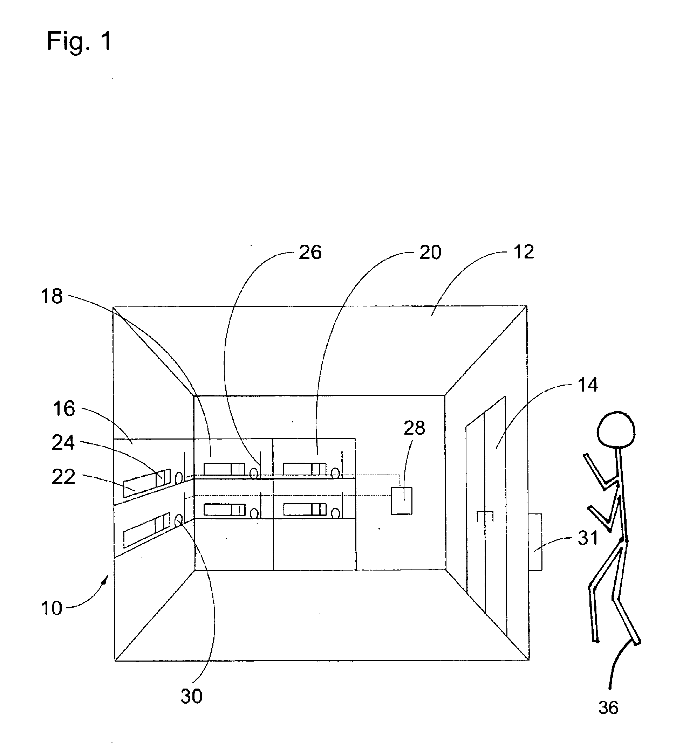

In Fig.1 ist ein allgemein mit 10 bezeichntes Lager dargestellt. Das Lager 10 umfasst einen abgeschlossenen Raum 12. Der Raum 12 ist mit einer Tür 14 versehen. Die Tür 14 ist ist regelmäßig geschlossen. In dem Raum 12 sind Regale 16, 18 und 20 vorgesehen. Die Regale 16, 18 und 20 dienen der Lagerung verschiedener Produkte 22.

Jedes einzelne Produkt 22 ist mit einer Produktkennung versehen, die in einem RFID-Transponder 24 gespeichert und abrufbar ist.

In jedem Regalfach der Regale 16, 18 und 20 ist eine eigene Antenne 26 vorgesehen. Mit der Antenne 26 werden die Informationen empfangen, welche auf dem RFID-Transponder des dort eingelagerten Racks 22 gespeichert sind. Im Bereich des Raums ist ferner eine an die Regalfach-Antennen 26 angeschlossene Datenverarbeitungsanlage 28 zum Abrufen der Produktkennungen und Lokalisieren der Produkte vorgesehen. Die Anlage 28 umfasst einen Speicher und Rechnermittel zur Auswertung der empfangenen Informationen. Die Lokalisierung der Produkte erfolgt, indem die Produktkennung in die Datenverarbeitungsanlage 28 eingegeben wird. Diese ermittelt mittels der Antennen 26 die Lage des zugehörigen Regalfachs. Über eine leuchtende LED-Anzeige 30 wird das Regalfach angezeigt, in dem das Produkt liegt.

Außerhalb des Lagerraums 12 ist im Bereich der Tür 14 ein Terminal 31 angeordnet. Das Terminal 31 umfasst einen Kartenleser, einen Monitor und eine Tastatur. Zwischen der Datenverarbeitungsanlage 28 und dem Terminal 31 findet ein bidirektionaler Datenaustausch statt.

Wenn eine Person ein Produkt 22 aus dem Lager 10 entnehmen möchte, muß sie sich zunächst ausweisen. Die Person 36 steckt ihre Ausweiskarte, zum Beispiel eine Kreditkarte oder einen Firmenausweis, in den Kartenleser. Der Kartenleser liest die personenbezogenen Daten aus der Ausweiskarte aus und speichert diese ab. Ferner liest der Kartenleser eine auf der Karte gespeicherten Identifizierungscode ein. Anschließend wird die Person über den Monitor aufgefordert, den (nicht angezeigten) zur Karte gehörigen Identifizierungscode über die Tastatur einzugeben. Der eingegebene Identifizierungscode wird mit dem gespeicherten Identifizierungscode verglichen. Wenn die Person zugangsberechtigt ist und den korrekten Identifizierungscode eingegeben hat, öffnet die Tür 14 und gibt den Zugang zum Lager 12 frei. Während sich diese Person in dem Lager befindet, haben weitere Personen keinen Zugang. Die Person 36 ist nun in der Lage, die gewünschten Produkte 22 zu entnehmen.

Über die Anordnung von RFID-Antennen 26 wird ermittelt, welche Produkte das Lager mit der Person verlassen. Die zugehörigen Produktdaten werden zusammen mit den Personendaten gespeichert und an eine Abrechnungsstelle übermittelt, welche die entsprechenden Kosten abrechnet.

Produkte, deren Lage der Person unbekannt ist, können an dem Terminal gesucht werden. Zu diesem Zweck wird der Produktname oder die Produktkennung über eine übliche Auswahl- und/oder Suchfunktion eingegeben. Die mit der Datenverarbeitungsanlage 28 und der Anordnung von Antennen 26 bestimmte Lage des Produkts wird dann mittels der LED 30 angezeigt.

Im vorliegenden Ausführungsbeispiel wurde eine eigene Antenne für jedes einzelne Produkt an jedem einzelnen Lagerplatz vorgesehen. Alternativ ist eine eigene Antenne für jede Produktsorte, zum Beispiel aus einer Transportverpackung, vorgesehen. Beide Vorgehensweisen ermöglichen die chaotische, d.h. ungeordnete Lagerung auch in komplexen, großen Lagern. Das Auffüllen mit neuen Produkten wird dadurch wesentlich beschleunigt und kann von quasi unqualifiziertem Personal durchgeführt werden.

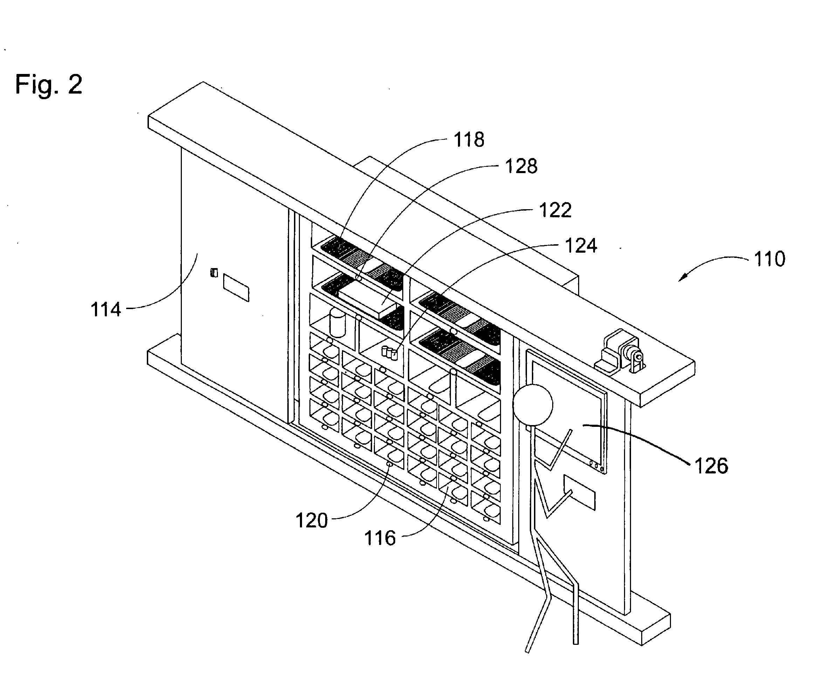

Fig.2 zeigt ein alternatives Ausführungsbeispiel. Ein Lager 110 ist als nicht-begehbares Lager ausgestaltet. Im vorliegenden Fall handelt es sich bei dem Lager 110 um einen Laborschrank für die Lagerung von medizinischen Proben. Der Laborschrank ist mit hierfür geeigneten Klimatisierungseinrichtungen versehen. Insbesondere kann der Laborschrank auch ein Kühlschrank oder eine kryogene Einreichtung sein, wenn die Proben dies erfordern.

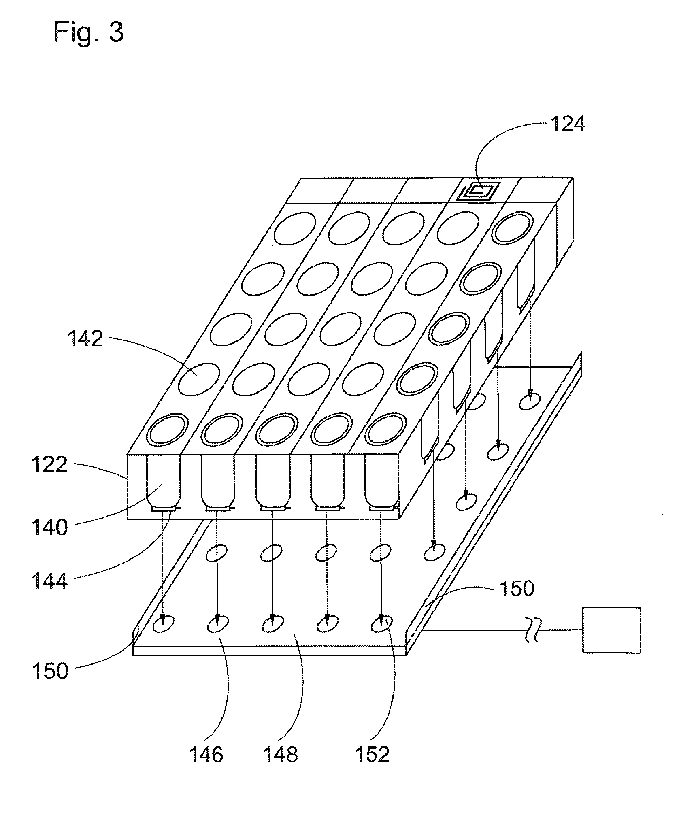

Der Laborschrank 110 ist mit Schiebetüren 114 verschlossen. In dem Laborschrank ist eine Vielzahl von Lagerplätzen 116, 118, auch unterschiedlicher Größe, vorgesehen. Jeder Lagerplatz ist mit einer LED 120 versehen. Ähnlich wie bei dem in Fig.1 dargestellten Ausführungsbeispiel ist jedes Produkt mit einem Transponder 124 und einer Produktkennung versehen. Im vorliegenden Ausführungsbeispiel sind die Produkte Racks 122 mit einer Vielzahl von Probenbehältern 140. Ein Beispiel für ein solches Rack 122 ist in Figur 3 dargestellt. Auch hier ist jeder Lagerplatz 116, 118 mit einer eigenen Antenne versehen, mit welcher bestimmbar ist, ob ein Rack an dem Lagerplatz vorhanden ist. Wenn ein Rack 122 vorhanden ist, kann mittels des Transponders 124 die Produktkennung abgefragt und ausgewertet werden. Eine Suche nach einem Rack 124 erfolgt, indem am Terminal 126 eine Anfrage erfolgt. Ein Treffer wird dann angezeigt, indem die LED 128 leuchtet.

Jedes Rack 122 hat Aufnahmen 142 für eine Vielzahl von Probenbehältern 140. Jeder Probenbehälter 140 ist auf der Unterseite mit einem individuellen Transponder 144 versehen. In dem individuellen Transponder sind Informationen über die in dem Probenbehälter 140 enthaltene Probe gespeichert. Es wäre sehr aufwändig für jeden dieser Probenbehälter 140 eine eigene Antenne vorzusehen, die Informationen aus dem an diesem Probenbehälter vorgesehenen, individuellen RFID-Transponder 144 ausliest. Aus diesem Grund gehört zu dem Laborschrank 110 eine Antennenanordnung 146. Die Antennenanordnung 146 umfasst eine Basis 148 mit Schienen 150. Auf diese Antennenanordnung 146 wird das Rack 122 aufgestellt. Die Schienen 150 stellen sicher, dass das Rack in immer gleicher Lage auf der Antennenanordnung 146 aufgesetzt wird. Statt Schienen 150 können selbstverständlich auch andere Führungsmechanismen verwendet werden. Die Antennenanordnung 146 weist eine Vielzahl von individuellen Antennen 152 auf. Wenn das Rack 122 korrekt auf der Antennenanordnung 146 aufgesetzt ist, liegt jede Antenne 152 unterhalb einer Aufnahme 142 und kann den individuellen Transponder 144 des in die Aufnahme 142 eingesteckten Probenbehälters 140 auslesen.

Die individuellen Antennen 152 lesen die Informationen aus dem individuellen Transponder 144 aus und leiten diese an den Transponder 124 des Racks 122. Auf diese Weise sind in dem Transponder 124 des Racks 122 Informationen über alle darin gelagerten Probenbehälter gespeichert. Über eine Platznummerierung oder sonstige Beschreibung des Aufnahmeplatzes innerhalb des Racks, beispielsweise nach Zeilen und Spalten, kann nun die Lage auch der einzelnen Probenbehälter 144 eindeutig bestimmt werden. Der Vorteil dieser Vorgehensweise ist es jedoch, dass die Antennenanordnung 146 mit den vergleichsweise teuren Antennen 152 nur einmal für jede Racksorte vorhanden sein muß. Jedes Rack 122 kann nach dem Auslesen der Informationen aus den individuellen Transpondern 144 und Speichern in dem gemeinsamen Racktransponder 124 ohne die Antennenandordnung in einem Fach gelagert werden.

Bei der Suche nach einem bestimmten Probenbehälter leuchtet zunächst die LED des Racks. Wenn das Rack 122 dem Fach entnommen wird, kann mittels der Antennenanordnung bestimmt werden, wo der gesuchte Probenbehälter vorliegt. Eine zusätzliche Verifizierungsanordnung mit einer Antenne zum Auslesen des individuellen Transponders und zum Anzeigen der ausgelesenen Informationen ermöglicht die Überprüfung des Probenbehälters.

In einer weiteren Ausgestaltung der Erfindung ist das Lager mobil ausgebildet und es sind Mittel zur Lokalisierung des gesamten Lagers vorgesehen. Ein solches mobiles Lager kann zum Beispiel ein Kontainer oder Lastkraftwagen sein. Gibt es mehrere derartige Lager bietet sich die Möglichkeit, die RFID-Technologie zur Bestandsaufnahme zu nutzen. Über eine Fernabfrage kann dann ermittelt werden, welches der mobilen Lager ein gewünschtes Produkt hält und welches dieser Lager sich am nächsten am Zielort befindet, wo das Produkt benötigt wird.

Zur Organisation mehrerer Lager (Slaves) wird in einer weiteren Ausgestaltung ein zentraler Server (Master) eingerichtet, der mit den Autorisierungseinrichtungen und/oder den Antennen in Verbindung steht, so dass keine weiteren Datenverarbeitungsanlagen erforderlich sind.

Die vorliegenden Anordnungen sind derart ausgestaltet, dass ein Produkt, dass als entnommen oder gekauft registriert wurde, nicht zurückgegeben werden kann. Für den Fall der Rückgabe ist ein eigenes Inspektionsfach vorgesehen. Hier können Produkte zur Inspektion hinterlegt werden. Ist das Produkt ohne Beanstandungen, wird es dem entsprechenden Konto wieder gutgeschrieben, bzw. die Belastung storniert.

## Patentansprüche

1. Lagersystem enthaltend
(a) ein Lager (10), in welchem eine Vielzahl von unterschiedlichen Produkten (22, 24, 26) lagerbar ist, wobei jedes der Produkte (22, 24, 26) mit einem Radio Frequenzy Identification (RFID)-Transponder versehen ist, und
(b) eine Antenne (28) zur Identifizierung der Produkte (22, 24, 26) mittels des RFBD-Transponders,
(c) wobei jeder Lagerort mit einer RFID-Antenne versehen ist und die Produktlage und/oder Produktkennung eindeutig mittels dieser Antenne erfassbar und/oder anzeigbar ist,
**dadurch gekennzeichnet, dass**
(d) die mit einem RFID-Transponder versehenen Produkte von Racks zur Aufnahme von Probenbehältern mit einer Probenkennung gebildet sind, und die Lage und Probenkennung in dem RFID-Transponder des zugehörigen Racks speicherbar ist, und
(e) jeder Probenbehälter mit einem RFID-Transponder zum Speichern der jeweiligen Probenkennung versehen ist.

2. Lagersystem nach Anspruch 1, **gekennzeichnet durch** eine zu der räumlichen Anordnung der Probenbehälter-Aufnahmen korrespondierende Antennenanordnung zum Auslesen der zu den Probenbehältern gehörigen, in den RFID-Trenspondern gespeicherten Probenkennung.

3. Lagersystem nach Anspruch 2, **dadurch gekennzeichnet, dass** die Lage der Einzelantennen innerhalb der Antennenanordnung zusammen mit der Probenkennung des zugehörigen Probenbehälters als Teil der Produktkennung auf den RFID-Transponder des Racks übertragbar, dort speicherbar und von der Antenne für den Lagerort auslesbar ist.

4. Lagersystem nach einem der Ansprüche 2 oder 3, **gekennzeichnet durch** Mittel zum separaten Auslesen des RFID-Transponders eines einzelnen Probenbehälters.

5. Lagersystem nach einem der vorgebenden Ansprüche, **dadurch gekennzeichnet, dass** das Lager (10) abgeschlossen und insbesondere ein Schrank ist, und ein Zugang (14) vorgesehen ist mit einer Autorisierungseinrichtung (30) zur Überprüfung von Autorisieungsdaten, insbesondere mittels eines Kartenlesers und einer Personenidentifizierungskarte und oder einer Eingabetastatur (36) zur Eingabe eines personenspezifischen Codes.

6. Lagersystem nach Anspruch 5, **gekennzeichnet durch** Mittel zum Speichern und/oder Übertragen von produktspezifischen Daten zusammen mit den Autorisierungsdaten.

7. Lagersystem nach einem der vorgehenden Ansprüche, **dadurch gekennzeichnet, dass** ein Speicher zum Speichern der von der Antenne (28) erfassten Produktlage in dem Lager zusammen mit produktspezifischen Daten vorgesehen ist, sowie Mittel (30) zur Abfrage der Produktlage.

8. Lagersystem nach einem der vorgehenden Ansprüche, **dadurch gekennzeichnet, dass** das Lager (10) mobil ausgebildet ist und Mittel zur Lokalisierung des gesamten Lagers vorgesehen sind.

9. Lagersystem nach einem der vorgehenden Ansprüche, **dadurch gekennzeichnet, dass** weitere, gleichartige Lager vorgesehen sind, welche über ein Netzwerk miteinander verbunden sind.

10. Lagersystem nach Anspruch 9, **dadurch gekennzeichnet, dass** Mittel zur Abfrage der Lage und/oder Menge von gelagerten Produkten für alle Lager vorgesehen sind.

## Claims

1. Storage system comprising
(a) a storage (10) adapted to store a plurality of different products (22, 24, 26), each of the products being provided with a radio frequency identification (RFID) transponder, and
(b) an antenna (28) for identifying the products (22, 24, 26) by means of the RFID transponder,
(c) wherein each storage position is provided with an RFID antenna and the product position and/or product identification is adapted to be detected and/or displayed with such antenna,
**characterized in that**
(d) the products provided with an RFID transponder are formed by racks for receiving sample containers with a sample identification and the RFID transponder and the respective racks are adapted to store the position and the sample identification, and
(e) each of the sample containers is additionally provided with an RFID transponder for storing the respective sample identification.

2. Storage system according to claim 1, **characterized in that** an antenna assembly corresponding to the spatial arrangement of the sample container receptacles is provided for reading the sample identification corresponding to the sample containers and stored in the RFID transponders.

3. Storage system according to claim 2, **characterized in that** the position of the individual antennas within the antenna assembly can be transmitted to the RFID transponder of the rack together with the sample identification of the corresponding sample container as part of the product identification, it can be stored therein and read out by the antenna used for reading the storage position.

4. Storage system according to any of claims 2 or 3, **characterized by** means for the separate reading of the RFID transponder on an individual sample container.

5. Storage system according to any of the preceding claims, **characterized in that** the storage (10) is closed, and in particular is a cabinet, and access (14) is provided with an authorizing device (30) for checking authorization data, especially by means of a card reader and a person identification card and/or an input device for inserting a person specific code.

6. Storage system according to claim 5, **characterized by** means for storing and/or transmitting product specific data together with the authorization data.

7. Storage system according to any of the preceding claims, **characterized in that** an electronic storage is provided for storing the product position in the storage detected by the antenna (28) together with product specific data, as well as means (30) for entering a query regarding the product position.

8. Storage system according to any of the preceding claims, **characterized in that** the storage is a mobile storage and means are provided for localizing the entire storage.

9. Storage system according to any of the preceding claims, **characterized in that** further storages of the same kind are provided which are interconnected through a network.

10. Storage system according to claim 9, **characterized in that** means are provided for searching the position and/or amount of stored products in all storages.

## Revendications

1. Système d'entreposage comprenant
(a) un dépôt (10) dans lequel peuvent être entreposés de nombreux produits différents (22, 24, 26), chacun des produits (22, 24, 26) étant pourvu d'un transpondeur Radio Frequency Identification (RFID), et
(b) une antenne (28) pour l'identification des produits (22, 24, 26) au moyen du transpondeur RFID,
(c) chaque endroit d'entreposage étant pourvu d'une antenne RFID et la localisation du produit et/ou la caractéristique du produit pouvant être saisie et/ou affichée distinctement au moyen de cette antenne,
**caractérisé en ce que**
(d) les produits pourvus d'un transpondeur RFID sont formés de racks destinés à loger des récipients pour échantillons présentant une caractéristique d'échantillon, et la localisation et la caractéristique d'échantillon peuvent être mémorisées dans le transpondeur RFID du rack correspondant,
(e) chaque récipient pour échantillons est pourvu d'un transpondeur RFID destiné à mémoriser la caractéristique d'échantillon correspondante.

2. Système d'entreposage selon la revendication 1, **caractérisé par** une disposition d'antennes correspondant à la disposition spatiale des logements des récipients pour échantillons et destinée à la lecture de la caractéristique d'échantillon associée aux récipients pour échantillons et mémorisée dans les transpondeurs RFID.

3. Système d'entreposage selon la revendication 2, **caractérisé en ce que** la localisation de chacune des antennes à l'intérieur de la disposition d'antennes peut être transmise au transpondeur RFID du rack, en tant qu'élément de la caractéristique d'échantillon, conjointement avec la caractéristique d'échantillon du récipient pour échantillons correspondant, peut y être mémorisée et lue par l'antenne destinée à l'endroit d'entreposage.

4. Système d'entreposage selon l'une quelconque des revendications 2 ou 3, **caractérisé par** des moyens pour la lecture séparée du transpondeur RFID de chacun des récipients pour échantillons.

5. Système d'entreposage selon l'une quelconque des revendications précédentes, **caractérisé en ce que** le dépôt (10) est fermé et est notamment une armoire, et un accès (14) est prévu à l'aide d'un dispositif d'autorisation (30) pour la vérification des données d'autorisation, notamment au moyen d'un lecteur de carte et d'une carte d'identification de personnes et/ou d'un clavier d'entrée (36) pour l'entrée d'un code spécifique à chaque personne.

6. Système d'entreposage selon la revendication 5, **caractérisé par** des moyens pour la mémorisation et/ou la transmission de données spécifiques à chaque produit conjointement avec les données d'autorisation.

7. Système d'entreposage selon l'une quelconque des revendications précédentes, **caractérisé en ce qu'**une mémoire pour la mémorisation de la localisation du produit saisie par l'antenne (28) est prévue dans le dépôt conjointement avec des données spécifiques à chaque produit, ainsi que des moyens (10) pour la demande de la localisation du produit.

8. Système d'entreposage selon l'une quelconque des revendications précédentes, **caractérisé en ce que** le dépôt (10) est réalisé en dépôt mobile et des moyens pour la localisation du dépôt dans sa totalité sont prévus.

9. Système d'entreposage selon l'une quelconque des revendications précédentes, **caractérisé en ce que** d'autres dépôts semblables reliés les uns aux autres via un réseau sont prévus.

10. Système d'entreposage selon la revendication 9, **caractérisé en ce que** des moyens destinés à demander la localisation et/ou la quantité de produits entreposés sont prévus pour tous les dépôts.
